# EUROPEAN PATENT APPLICATION

(11) **EP 4 636 900 A1**
(43) Date of publication of application: **22.10.2025**
(21) Application number: 25170725.3
(22) Date of filing: 15.04.2025
(51) Int. Cl.: H01M 10/0587, H01M 50/107, H01M 50/179, H01M 50/531, H01M 50/593, H01M 50/533, H01M 50/528, H01M 50/538, H01M 50/552, H01M 50/586

(54) **CYLINDRICAL SECONDARY BATTERY**

(30) Priority: 15.04.2024 KR 20240049782
(71) Applicant: SAMSUNG SDI CO., LTD., Yongin-si, Gyeonggi-do 17084 (KR)
(72) Inventor: PARK, Jung Hyun, 17084 Yongin-si, Gyeonggi-do (KR); LEE, Won Jin, 17084 Yongin-si, Gyeonggi-do (KR); KIM, Jung Hyun, 17084 Yongin-si, Gyeonggi-do (KR); LEE, Jung Su, 17084 Yongin-si, Gyeonggi-do (KR); KIM, So Yeon, 17084 Yongin-si, Gyeonggi-do (KR); KIM, Joung Ku, 17084 Yongin-si, Gyeonggi-do (KR)
(74) Representative: Gulde & Partner

(57) **Abstract**

Disclosed is a cylindrical secondary battery (10) including an electrode assembly (200) including a first electrode plate (210) having a first active material layer and a first uncoated portion free of the first active material layer, a second electrode plate (220) having a second active material layer and a second uncoated portion free of the second active material layer, and a separator (230) interposed between the first electrode plate (210) and the second electrode plate (220), the electrode assembly (200) being wound in a cylindrical shape, an insulating part (700a) provided on one side of each of the first and second uncoated portions, a cylindrical can (100) accommodating the electrode assembly (200), and a cap assembly (600) coupled to one end of the can (100). A part of each of the first and second uncoated portions adjacent to the center of the winding is removed to form a cutting area. The insulating part (700a) is provided in the cutting area.

## Description

### BACKGROUND

### 1. Field

Embodiments of the present disclosure relates to a cylindrical secondary battery having an improved insulating structure.

### 2. Description of the Related Art

In general, a cylindrical secondary battery includes a cylindrical electrode assembly, a cylindrical can configured to accommodate the electrode assembly and an electrolyte, and a cap assembly coupled to an opening in the upper end of the can to seal the can and to allow current generated in the electrode assembly to flow to an external device. The electrode assembly is configured such that a positive electrode uncoated portion (substrate) and a negative electrode uncoated portion are disposed or arranged so as to be oriented in opposite directions. When viewed based on or from the perspective of the positive electrode uncoated portion, an end portion of a negative electrode mixture portion (a portion of a negative electrode plate on which a negative electrode active material is formed) is disposed toward the positive electrode uncoated portion.

If charging and discharging of the secondary battery are repeated due to use thereof, expansion of the negative electrode mixture portion may occur, or movement of the negative electrode mixture portion may occur due to negative electrode slip. One problem that could entail is that short circuit could occur between the positive electrode uncoated portion and the negative electrode mixture portion. Thus, it is desirable to prevent such short circuit.

The information disclosed in this section is provided only for enhancement of understanding of the background of the disclosure and therefore it may contain information that does not form the related art.

### SUMMARY

Embodiments of the present disclosure provide a cylindrical secondary battery having an improved insulating structure.

A cylindrical secondary battery according to the present disclosure includes an electrode assembly including a first electrode plate having a first active material layer and a first uncoated portion free of the first active material layer, a second electrode plate having a second active material layer and a second uncoated portion free of the second active material layer, and a separator interposed between the first electrode plate and the second electrode plate, the electrode assembly being wound in a cylindrical shape to form a and in particular at least one winding, an insulating part provided on one side of the first uncoated portion and one side of the second uncoated portion, a cylindrical can accommodating the electrode assembly, and a cap assembly coupled to one side or end of the can, wherein a first portion of the first uncoated portion and a second portion of the second uncoated portion adjacent to the center of the winding is omitted and for example removed to form a cutting area, and the insulating part is provided in the cutting area. Hence, as space is provided for the insulating part, short circuits can be prevented in a compact manner, improving the capacity to volume ratio of the battery.

Further embodiments of the disclosure are described in the following, wherein these embodiments can be combined as desired.

The insulating part may be formed by an insulative material applied to the cutting area. An advantage of this embodiment may be that the insulating part needs not to be handled as a separate part when assembling the battery.

The first active material layer and the second active material layer may be free of the insulative material. An advantage of this embodiment may be that space can be readily used for the active material layers and is not unnecessarily used by the insulative material.

The insulative material may be on an end portion of the separator in the cutting area. An advantage of this embodiment may be that the insulative material is kept apart from the active material layers by the separator, such that not additional or separate elements for placing the insulative material, which would add weight and/or require space, are required.

The insulative material applied to the cutting area may have a thickness of 0.1 mm to 0.7 mm and for example of at least 0.1 mm or up to 0.2 mm, up to 0.3 mm, up to 0.4 mm, up to 0.5 mm, up to 0.6 mm or up to 0.7 mm. The thickness of the insulative material may correspond, be smaller or be greater than a thickness or depth of the cutting area. The thickness or depth of the cutting area may be defined by a difference in length or the separator in the cutting area and outside of the cutting area. The insulative material may have a thickness, that is 1 %, 2 %, 3 %, 4 %, 5 %, up to 10 %, up to 15 % or up to 20% grater than the thickness or depth of the cutting area. An advantage of this embodiment may be that the insulative material can provide for sufficient insulation without requiring much space.

The insulative material applied in the range of 2 mm to 5 mm and for example of at least 2 mm or up to 3 mm, up to 4 mm or up to 5 mm from the center of the winding in a radial direction. An advantage of this embodiment may be while the insulative material sufficiently insulations and/or stabilizes the position of the electrode assembly, sufficient space for connecting the electrode plates remains.

The insulating part may have a hollow circular ring shape. An advantage of this embodiment may be that the insulating part is only present where it may be advantageously stabilize and/or position the electrode assembly without adding too much material, e.g. at its center.

The insulating part may be inserted into an end portion of the cutting area. The end portion of the cutting area may be a portion or section of the cutting area that is farther away from a center of the winding than other portions or sections thereof. An advantage of this embodiment may be that the insulating part may position the electrode assembly in an even more stable manner.

The can may include a circular upper surface portion and a side portion extending downward from the upper surface portion and including an open lower end. The cap assembly may be coupled to the lower end of the side portion and may be insulated from the side portion. An advantage of this embodiment may be that a ring shaped insulating part may be arranged concentric with the side portion, thus better keeping the electrode assembly in position.

The cylindrical secondary battery may further include a terminal unit, which includes a rivet-type positive electrode terminal electrically connected to the first electrode plate and inserted into a through-hole in the upper surface portion and a gasket interposed between the positive electrode terminal and the upper surface portion and made of an insulative material. An advantage of this embodiment may be that the ring-shaped insulating part may not occupy space required by the rivet-type positive electrode terminal, such that the total length of the battery can be kept at a predetermined length without loosing battery capacity.

The side portion may be electrically connected to the second electrode plate, the first electrode plate may be a positive electrode, and the second electrode plate may be a negative electrode. An advantage of this embodiment may be that the battery provides for easily distinguishable battery poles respectively connected to one of the positive and negative electrodes.

The cylindrical secondary battery may further include a first electrode current collector disposed between the first electrode plate and the positive electrode terminal and electrically connected to the positive electrode terminal and the first electrode plate. An advantage of this embodiment may be that the battery provides for easily distinguishable battery poles respectively connected to one of the positive and negative electrodes.

The cylindrical secondary battery may further include an insulating tape attached to the first electrode current collector facing the positive electrode terminal. An advantage of this embodiment may be that undesired electrical contacts are further reduced.

The first electrode current collector may include a welding portion welded to the positive electrode terminal, and the insulating tape may be attached to an area except for the welding portion. An advantage of this embodiment may be that welding the welding portion does not affect the insulating tape.

The cylindrical secondary battery may further include a second electrode current collector disposed between the second electrode plate and the cap assembly, electrically connected to the second electrode plate and the side portion, and insulated from the cap assembly. An advantage of this embodiment may be that the battery provides for easily distinguishable battery poles respectively connected to one of the positive and negative electrodes.

The cap assembly may include a cap plate coupled to the side portion and an insulator interposed between the cap plate and the side portion and made of an insulative material. An advantage of this embodiment may be that the cap plate can be affixed without creating undesired electrical connections.

An area except for the cutting area of the first uncoated portion may be cut in the longitudinal direction of the electrode assembly to form a plurality of substrate tabs. An advantage of this embodiment may be that tabs can be formed from substate without requiring handing and attaching separate tabs.

An area except for the cutting area of the second uncoated portion may be cut in the longitudinal direction of the electrode assembly to form a plurality of substrate tabs. An advantage of this embodiment may be that tabs can be formed from substate without requiring handing and attaching separate tabs.

The plurality of substrate tabs may be folded at an angle, e.g. before winding of the electrode assembly. An advantage of this embodiment may be that the substrate tabs are better accessible before winding. After winding, the substrate tabs may not be sufficiently accessible for folding. Hence, pre-folding may facilitate prepositioning of the substate tabs, which may facilitate connecting the substate tabs to a current collector.

### BRIEF DESCRIPTION OF THE DRAWINGS

The accompanying drawings, which are incorporated in this specification, illustrate embodiments and further illustrate and describe the aspects and features of the disclosure in conjunction with the detailed description of exemplary embodiments that follows. The disclosure is not to be construed as limited to the drawings. In the drawings:
FIG. 1 is a perspective view of an exemplary cylindrical secondary battery;
FIG. 2A is a cross-sectional view of the cylindrical secondary battery shown in FIG. 1;
FIGS. 2B and 2C are plan views of an exemplary first electrode current collector shown in FIG. 2A;
FIG. 3 is a perspective view of an exemplary cylindrical secondary battery;
FIG. 4 is a perspective view showing some components of the cylindrical secondary battery shown in FIG. 3;
FIG. 5 is a schematic view of an electrode assembly according to an embodiment of the present disclosure;
FIG. 6 is a schematic view of a process of manufacturing the electrode assembly shown in FIG. 5;
FIG. 7 is a schematic view of an electrode assembly provided with an insulating part according to an embodiment of the present disclosure; and
FIG. 8 is a cross-sectional view schematically showing the insulating part shown in FIG. 7.

### DETAILED DESCRIPTION

Embodiments of the present disclosure are provided to more fully illustrate the disclosure to a person having ordinary skill in the art. The following embodiments may be modified in various other forms without departing form the scope of the present disclosure. Thus, disclosure is not limited to the embodiments described herein. Rather, the embodiments of the present disclosure are provided to make the disclosure more thorough and complete, and to completely convey the present disclosure fully to those skilled in the art.

In the figures, dimensions of the various elements, layers, etc. may be exaggerated clarity of illustration. The same reference symbols or numerals in the drawings designate the same elements. As used herein, the term "and/or" includes any and all combinations of one or more of the associated listed items. As used herein, the term "connected" refers not only to direct connection between members A and B but also to indirect connection between members A and B with member C interposed therebetween. Thus, it will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

The terms used in the specification are intended to describe embodiments of the present disclosure and are not intended to limit the disclosure. As used herein, singular forms "a" and "an" are intended to include plural forms as well, unless the context clearly indicates otherwise. As used herein, the terms "comprise" (or "include") and/or "comprising" (or "including") are intended to specify the presence of stated figures, integers, numbers, steps, operations, members, elements, components, and/or groups thereof and do not exclude the presence or addition of one or more other features, integers, figures, numbers, steps, operations, members, elements, and/or groups thereof.

While terms such as "first", "second," etc. are used herein to describe various elements, components, members, parts, regions, layers, sections, and/or portions, the elements, components, members, parts, regions, layers, sections, and/or the portions are not to be limited by the terms. The terms are used to distinguish one element, component, member, part, region, layer, section, or portion from another element, component, member, part, region, layer, section, or portion. Thus, a first element, component, member, part, region, layer, section, or portion hereinafter described may refer to a second element, component, member, part, region, layer, section, or portion without departing from the teachings of the present disclosure.

Spatially relative terms, such as "beneath," "below," "lower," "above," "upper," and the like, may be utilized to facilitate understanding of one element or feature shown in the drawings as different from another element or feature. The spatially relative terms are intended to encompass different orientations of the device in addition to the orientation depicted in the figures, and are intended to facilitate understanding of the disclosure in various states of process or use and are not intended to limit the disclosure. For example, if an element or feature in a figure is inverted, an element or feature described as "beneath" or "below" other elements or features would then be oriented "above," "over," or "upper" the other elements of features. Thus, the term "beneath" or "below" is a concept that encompasses both an orientation above and below. The device may be otherwise oriented (rotated 90 degrees or at other orientations), and the spatially relative descriptors used herein should be interpreted accordingly.

Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C.

As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

Hereinafter, a cylindrical secondary battery according to embodiments of the present disclosure will be described in detail with reference to the accompanying drawings.

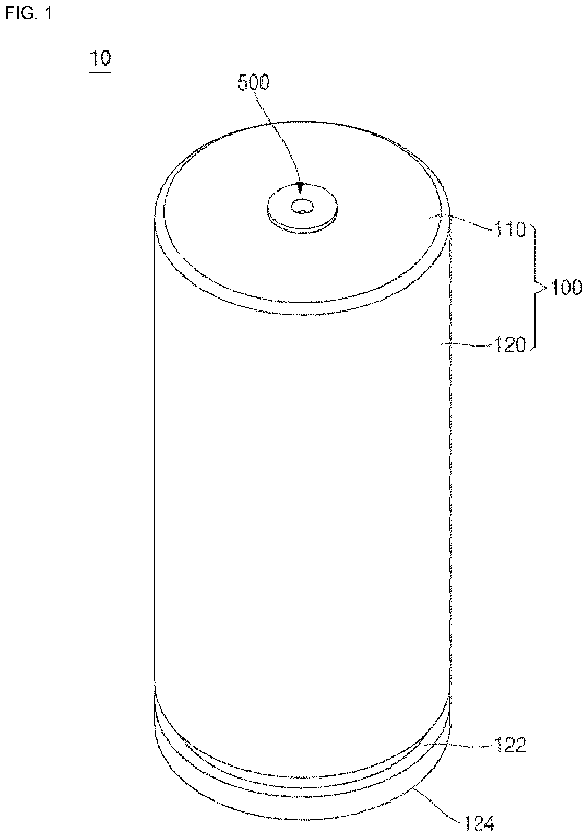

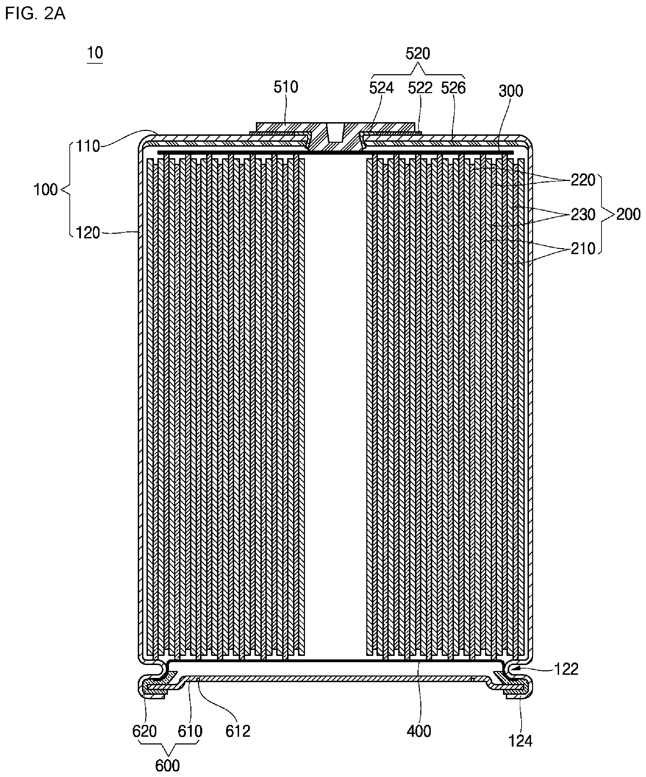

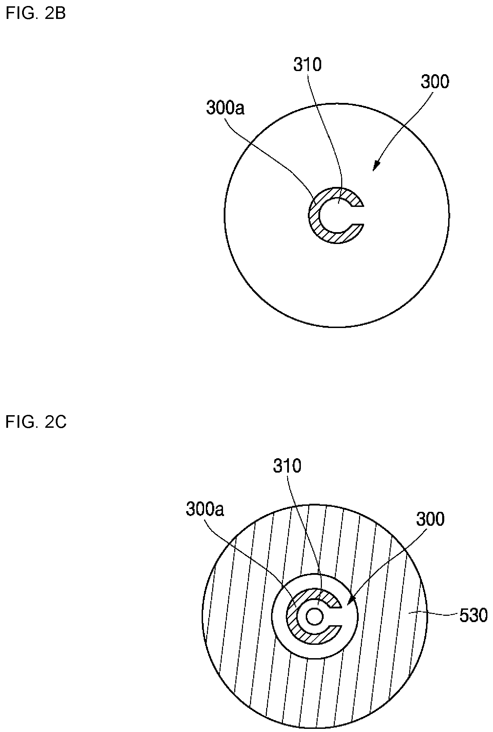

FIG. 1 is a perspective view of an exemplary cylindrical secondary battery. FIG. 2A is a cross-sectional view of the cylindrical secondary battery shown in FIG. 1. FIGS. 2B and 2C are plan views of an exemplary first electrode current collector shown in FIG. 2A.

As shown in FIGS. 1 and 2A, an exemplary cylindrical secondary battery 10 may include a cylindrical can 100 and an electrode assembly 200 accommodated in the can 100. The secondary battery 10 may further include a first electrode current collector 300 and a second electrode current collector 400 that are electrically connected to the electrode assembly 200 and may further include a terminal unit 500 electrically connected to the first electrode current collector 300. The secondary battery 10 may further include a cap assembly 600 configured to shield one end of the can 100.

Referring to FIGS. 1 and 2A, the can 100 may include a circular upper surface portion 110 and a side portion 120 extending downward from the upper surface portion 110. For example, the can 100 may have a hollow cylindrical shape having an open lower portion. A terminal hole may be formed through the upper surface portion 110, and the terminal unit 500 may be provided in the terminal hole. The side portion 120 may include a beading portion 122 formed adjacent to an end portion of the side portion 120. The beading portion 122 may be formed in the side portion 120 so as to be concave toward the interior of the can 100. The beading portion 122 may be provided for fixing of the electrode assembly 200 and seating of the cap assembly 600. The side portion 120 may include a crimping portion 124 formed at the end portion of the side portion 120 spaced apart from the beading portion 122. The crimping portion 124 may be formed by bending the end portion of the side portion 120 toward the interior of the can 100. The cap assembly 600 may be seated and fixed between the beading portion 122 and the crimping portion 124. The can 100 may be formed of steel, a steel alloy, nickel-plated steel, a nickel-plated steel alloy, aluminum, an aluminum alloy, or an equivalent thereto. However, the material of the can 100 is not limited thereto. During a manufacturing process, the can 100 may be placed such that the open lower end thereof is oriented upward, and then the electrode assembly 200 may be inserted into the can 100 together with an electrolyte. Thereafter, the cap assembly 600 may be seated on the beading portion 122, and then the crimping portion 124 may be formed to fix the cap assembly 600. Thereafter, the can 100 may be placed such that the cap assembly 600 is oriented downward. As needed, the secondary battery may be used with the cap assembly 600 oriented upward.

Referring to FIG. 2A, the electrode assembly 200 may include a first electrode plate 210, a second electrode plate 220, and a separator 230 interposed between the first electrode plate 210 and the second electrode plate 220. The electrode assembly 200 may be wound in a cylindrical shape. The first electrode plate 210 and the second electrode plate 220 may be electrically connected to a first electrode current collector 300 and a second electrode current collector 400, respectively. For example, the first electrode plate 210 may serve as a positive electrode, and the second electrode plate 220 may serve as a negative electrode. In other embodiments, the reverse may also be possible.

If the first electrode plate 210 is a positive electrode plate, the first electrode plate 210 may be formed by applying a first electrode active material, such as transition metal oxide, to a first electrode current collecting body, which is implemented as a metal foil made of, for example, aluminum or an aluminum alloy. A first uncoated portion, which is an area not coated with the first electrode active material, may be formed on the first electrode plate 210. The uncoated portion may be referred to as a "substrate". During the manufacturing process, the first uncoated portion may be cut to form a plurality of first substrate tabs. Before the electrode assembly 200 is wound, the first substrate tabs may be pre-formed so as to be folded at an angle (e.g., a predetermined angle). This may be referred to as preforming or pre-folding. If pre-folding is performed, it may be possible to minimize damage to or wrinkling of the substrate when the substrate is compacted in order to be connected to the current collector. In the drawings of the present disclosure, the first substrate tabs are illustrated by way of example as being disposed so as to be oriented upward. After the electrode assembly 200 is wound, the first substrate tabs may be electrically connected to the first electrode current collector 300, which is a positive electrode current collector. The first electrode current collector 300 may be electrically connected to a positive electrode terminal 510 of the terminal unit 500.

If the second electrode plate 220 is a negative electrode plate, the second electrode plate 220 may be formed by applying a second electrode active material, such as graphite or carbon, to a second electrode current collecting body, which is implemented as a metal foil made of, for example, copper, a copper alloy, nickel, or a nickel alloy. A second uncoated portion, which is an area not coated with the second electrode active material, may be formed on the second electrode plate 220. The uncoated portion may be referred to as a substrate. During the manufacturing process, the second uncoated portion may be cut to form a plurality of second substrate tabs. Before the electrode assembly 200 is wound, the second uncoated portion may be pre-formed so as to be folded at an angle (e.g., a predetermined) angle. In the drawings of the present disclosure, the second substrate tabs are illustrated by way of example as being disposed so as to be oriented downward below the electrode assembly 200. After the electrode assembly 200 is wound, the second substrate tabs may be electrically connected to the second electrode current collector 400, which is a negative electrode current collector. The second electrode current collector 400 may be insulated from the cap assembly 600 and may be electrically connected to the can 100. Thus, the upper surface portion 110 of the can 100 may have a negative polarity, and the positive electrode terminal 510 of the terminal unit 500 may have a positive polarity.

The separator 230 may be disposed between the first electrode plate 210 and the second electrode plate 220 to prevent short circuit therebetween while allowing lithium ions to move therebetween. For example, the separator 230 may include polyethylene, polypropylene, or a composite film of polyethylene and polypropylene. In some examples, the separator 230 may be replaced with an inorganic solid electrolyte, such as a sulfide-based, oxide-based, or phosphate compound-based electrolyte that does not require a liquid or gel electrolyte.

The electrode assembly 200 may be accommodated in the can 100 together with an electrolyte. In some examples, the electrolyte may include a lithium salt, such as LiPF6 or LiBF4, in an organic solvent, such as ethylene carbonate (EC), propylene carbonate (PC), diethyl carbonate (DEC), ethyl methyl carbonate (EMC), or dimethyl carbonate (DMC). For example, the electrolyte may be in a liquid or gel form. In some examples, if an inorganic solid electrolyte is used, the electrolyte may be omitted.

Referring to FIG. 2A, the terminal unit 500 may include a positive electrode terminal 510 and at least one gasket 520. The positive electrode terminal 510 may be coupled to the upper surface portion 110 of the can 100 and may be electrically connected to the first electrode plate 210 via the first electrode current collector 300. The positive electrode terminal 510 may be coupled to the upper surface portion 110 in a rivet-coupling manner. The positive electrode terminal 510 may be inserted into the terminal hole from the outside of the can 100, and then the inner end portion thereof may be compressed through processing such as pressing or spinning to come into close contact with the inner side of the upper surface portion 110. In other embodiments, the positive electrode terminal 510 may be inserted into the terminal hole from the interior of the can 100, and then the outer end portion thereof may be compressed to come into close contact with the outer side of the upper surface portion 110. The gasket 520 may be interposed between the positive electrode terminal 510 and the terminal hole to insulate the can 100 and the positive electrode terminal 510 from each other.

The gasket 520 may be made of an insulative material and may include a first gasket 522, a second gasket 524, and a third gasket 526. The first gasket 522 may insulate the positive electrode terminal 510 and the upper surface portion 110 from each other. To this end, the first gasket 522 may be formed to be larger than a portion of the positive electrode terminal 510 that is exposed to the outside of the upper surface portion 110. The second gasket 524 may insulate the positive electrode terminal 510 and the terminal hole in the upper surface portion 110 from each other. The third gasket 526 may insulate the upper surface portion 110 and the first electrode current collector 300 from each other. To this end, the third gasket 526 may have a size and a shape identical or similar to those of the first electrode current collector 300. In other embodiments, the third gasket 526 may have a size or a shape identical or similar to those of the upper surface portion 110. In some embodiments, instead of the third gasket 526, an insulating tape 530 may be attached to the first electrode current collector 300.

FIG. 2B shows the shape of the exemplary first electrode current collector 300. The first electrode current collector 300 may have a disc shape and may be provided at a center thereof with a welding portion 310 that is welded to the positive electrode terminal 510. The welding portion 310 may have a substantially circular shape, and a C-shaped hole 300a may be formed around the welding portion 310 through the first electrode current collector 300. Due to such a shape of the hole 300a, the welding portion 310 may be connected to the other portion of the first electrode current collector 300 in which the hole 300a is not formed. The aforementioned insulating tape 530 may have a size and a shape capable of covering the entirety of the remaining area of the first electrode current collector 300, except for the welding portion 310, the hole 300a, and an area (e.g., a predetermined area) around the hole 300a. For example, the insulating tape 530 may have a circular ring plate shape having a cavity formed therein. The size and shape of the aforementioned insulating tape 530 may vary depending on the shape of the first electrode current collector 300. In other embodiments, the insulating tape 530 may be attached to the lower surface of the upper surface portion 110, rather than to the first electrode current collector 300.

The cap assembly 600 may include a cap plate 610 and an insulator 620. The edge of the cap plate 610 may be fixed to the side portion 120 of the can 100 by the beading portion 122 and the crimping portion 124, and may be insulated from the side portion 120 by the insulator 620. The cap plate 610 may include a notch 612 formed therein. The notch 612 may rupture if internal pressure exceeds a pressure (e.g., a predetermined pressure). The notch 612 may be formed to be thinner than the other area of the cap plate 610 and may serve as a vent through which an internal gas is discharged when rupturing.

Hereinafter, another exemplary cylindrical secondary battery will be described. A detailed description of the same features as those of the above-described embodiment will be omitted.

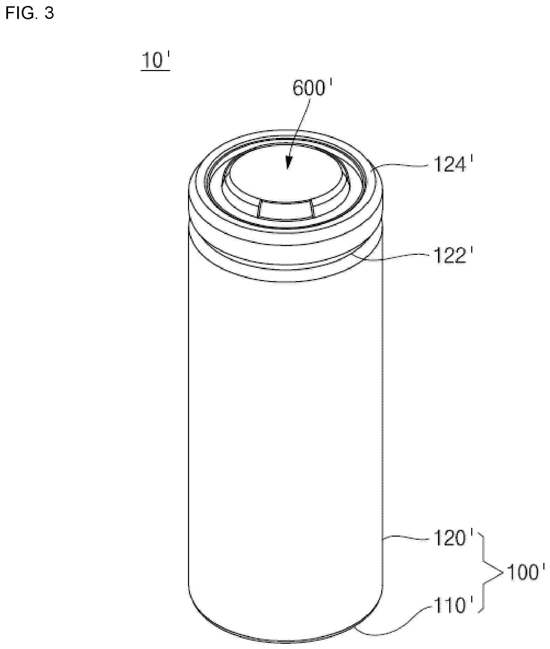

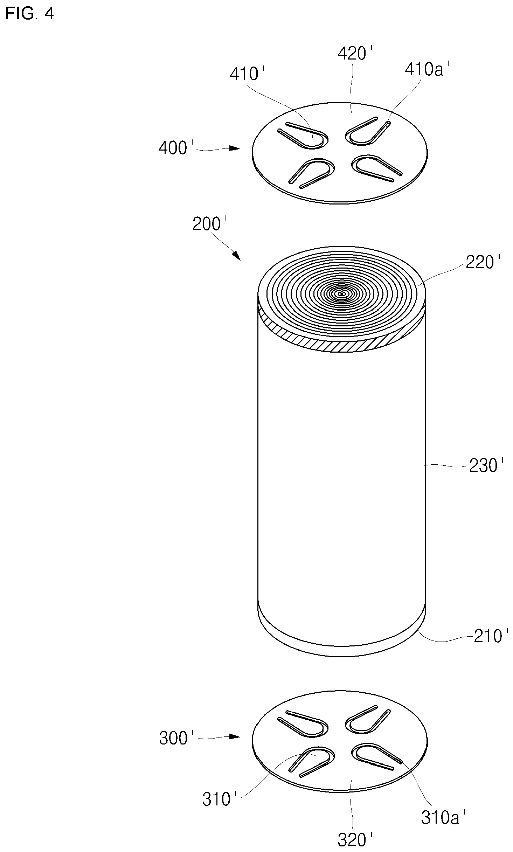

FIG. 3 is a perspective view of an exemplary cylindrical secondary battery. FIG. 4 is a perspective view showing some components of the cylindrical secondary battery shown in FIG. 3.

An exemplary cylindrical secondary battery 10' may include a cylindrical can 100', an electrode assembly 200' inserted into the can 100', and a cap assembly 600' coupled to one end of the can 100', and may include a first electrode current collector 300' and a second electrode current collector 400' that electrically connect the electrode assembly 200' to the can 100' and the cap assembly 600'. The can 100' may include beading part 122' and crimping part 124'. The cap assembly 600' may be disposed between beading part 122' and crimping part 124'. The cap assembly 600' may be electrically connected to the electrode assembly 200' and may be insulated from the can 100'.

The can 100' may have a cylindrical shape including a circular bottom portion 110' and a side portion 120' extending upward from the bottom portion 110', and the side portion 120' may have an open upper end (hereinafter referred to as an opening). During a process of manufacturing the secondary battery 10', the electrode assembly 200' may be inserted into the can 100' together with an electrolyte through the opening in the can 100'. In a state in which the electrode assembly 200' is accommodated in the can 100', a cap assembly 600' may be inserted into the opening to shield the opening.

The electrode assembly 200' may include a first electrode plate 210', a second electrode plate 220', and a separator 230'. In some embodiments, the first electrode plate 210' may be a negative electrode plate provided on both surfaces thereof with negative electrode active material layers. A first electrode uncoated portion not coated with the negative electrode active material layer may be formed at a portion of the first electrode plate 210'. The second electrode plate 220' may be a positive electrode plate provided on both surfaces thereof with positive electrode active material layers. A second electrode uncoated portion not coated with the positive electrode active material layer may be formed at a portion of the second electrode plate 220'. The separator 230' may be disposed between the first electrode plate 210' and the second electrode plate 220' to prevent short circuit therebetween while allowing lithium ions to move therebetween.

The first electrode plate 210', the second electrode plate 220', and the separator 230' may be wound in a substantially cylindrical shape, and may then be accommodated in the can 100'. In order to achieve winding thereof, the first electrode plate 210' and the second electrode plate 220' may be disposed such that the first electrode uncoated portion and the second electrode uncoated portion, not coated with an active material, are oriented in opposite directions. For example, the first electrode plate 210', which is a negative electrode plate, may be disposed such that the first electrode uncoated portion is oriented downward based on FIG. 4. The second electrode plate 220', which is a positive electrode plate, may be disposed such that the second electrode uncoated portion is oriented upward based on FIG. 4. Each of the first electrode uncoated portion and the second electrode uncoated portion may be cut to form a plurality of substrate tabs. Similar to the above-described embodiment, the substrate tabs may be pre-formed so as to be folded at an angle (e.g., a predetermined angle) before the winding process. After the substrate tabs are pre-formed, the electrode assembly 200' may be wound, and the first electrode current collector 300' and the second electrode current collector 400' may be connected to the substrate tabs.

The first electrode current collector 300' may have a substantially disc shape, and may electrically connect the first electrode plate 210' to the bottom portion 110' of the can 100'. To this end, the first electrode current collector 300' may include a plurality of substrate current collecting portions 310' and a can connection portion 320'. The substrate current collecting portions 310' may be welded to the first electrode uncoated portion so as to be electrically connected thereto. In order to form the substrate current collecting portions 310', horseshoe-shaped (substantially U-shaped) holes 310a' may be formed through the first electrode current collector 300'. Due to such a shape of the holes 310a', the substrate current collecting portions 310' may be connected to the can connection portion 320'. The remaining area of the first electrode current collector 300', except for the holes 310a' and the substrate current collecting portions 310', may correspond to the can connection portion 320'. The can connection portion 320' may be welded to the bottom portion 110' of the can 100' so as to be electrically connected thereto. Thus, the first electrode plate 210' may be electrically connected to the can 100'.

The second electrode current collector 400' may have a substantially disc shape, and may electrically connect the second electrode plate 220' to the cap assembly 600'. To this end, the second electrode current collector 400' may include a plurality of substrate current collecting portions 410' in order to be electrically connected to the second electrode uncoated portion. Although not shown in the drawings, the second electrode current collector 400' may be electrically connected to the cap assembly 600' via a separate electrode lead or tab. The substrate current collecting portions 410' may be welded to the second electrode uncoated portion so as to be electrically connected thereto. Thus, the second electrode plate 220' may be electrically connected to the cap assembly 600'. In order to form the substrate current collecting portions 410', horseshoe-shaped (substantially U-shaped) holes 410a' may be formed through the second electrode current collector 400'. Due to such a shape of the holes 410a', the substrate current collecting portions 410' may be connected to a remaining area 420' of the second electrode current collector 400' in which the holes 410a' are not formed. Although not shown in the drawings, an insulating tape may be attached to the upper surface of the second electrode current collector 400' in order to achieve insulation between the second electrode current collector 400' and the cap assembly 600'. The insulating tape may be provided to cover the remaining area 420' of the second electrode current collector 400' in which the substrate current collecting portions 410' and the holes 410a' are not formed.

In the cylindrical secondary battery according to the embodiments of the present disclosure having the above-described structure, the structure of the electrode assembly and a method of manufacturing the same will be described in more detail.

Although not shown in detail in FIG. 2 or 4, when the electrode assembly is wound to form a winding or a wound electrode assembly, the uncoated portion may not be formed in an area (e.g., a predetermined area) adjacent to a leading end of the electrode assembly. When the electrode assembly is wound, one end of each of the first electrode plate and the second electrode plate in the longitudinal direction, which is disposed at the center of the winding, may be defined as a "leading end", and the other end thereof in the longitudinal direction, which is disposed at the outermost periphery, may be defined as a "trailing end". The uncoated portion may be cut out from some areas adjacent to the leading ends of the first electrode plate and the second electrode plate, whereby the uncoated portion may be eliminated or may have a very small width. The cutting of the uncoated portion may help prevent the central core from being covered during a process of compacting the substrate after winding of the electrode assembly.

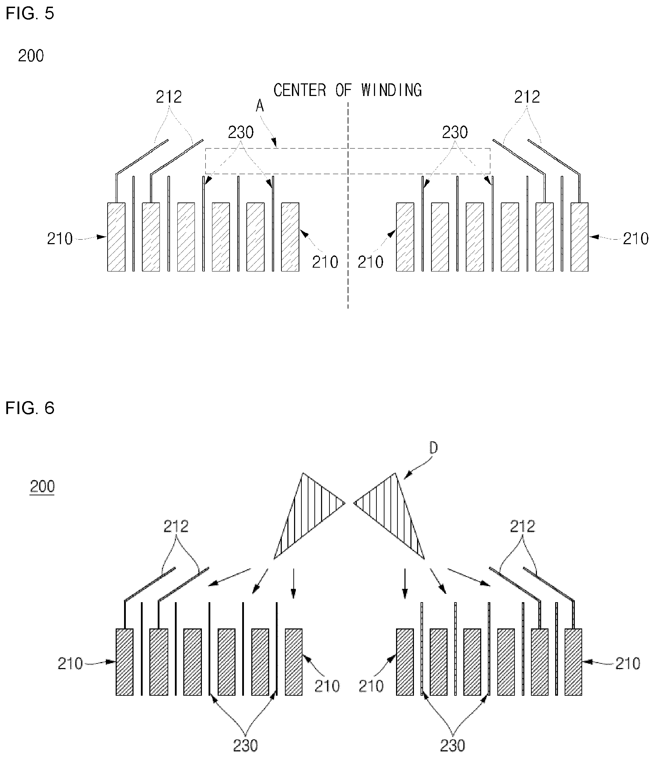

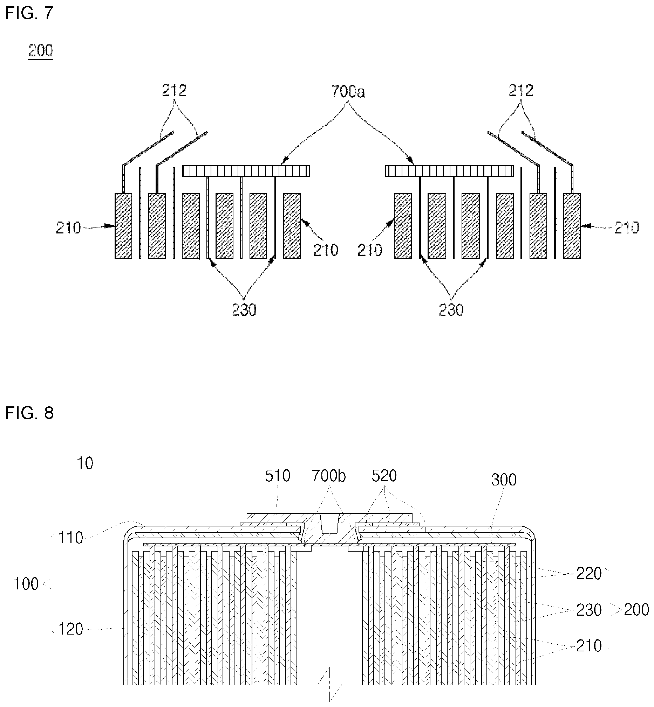

FIG. 5 is a schematic view of an electrode assembly according to an embodiment of the present disclosure. FIG. 6 is a schematic view of a process of manufacturing the electrode assembly shown in FIG. 5. FIG. 7 is a schematic view of the electrode assembly provided with an insulating member or part according to an embodiment of the present disclosure. FIG. 8 is a cross-sectional view schematically showing the insulating member shown in FIG. 7. For convenience of description, the reference numerals of the embodiment shown in FIGS. 1 and 2 are identically used in FIG. 8.

As shown in FIG. 5, the uncoated portion of a portion of the first electrode plate 210 that is adjacent to the leading end of the electrode assembly 200 may be cut out, whereby the uncoated portion may be eliminated or may have a very small length. Although only the first electrode plate is shown in the drawings, the second electrode plate may have the same structure as the first electrode plate, and thus a detailed description of the second electrode plate will be omitted. An area in which there is no uncoated portion or there is a very short uncoated portion, may be defined as a cutting area A. Because there is no uncoated portion or there is a very short uncoated portion in the cutting area A, the separator 230 may protrude farther outward than the uncoated portion. The cutting area A may be formed in an area that may be created by notching approximately ten substrate tabs 212.

The uncoated portion in the remaining area except for the cutting area A may be cut to form first substrate tabs 212 having a length (e.g., a predetermined length) and intervals therebetween. The first substrate tabs 212 may be pre-formed as described above, and thus may be folded in a direction (e.g., a predetermined direction), as shown in FIG. 5.

Thereafter, as shown in FIGS. 6 and 7, an insulating part or member 700a may be formed in the cutting area A. The insulating part or member 700a may be formed through application of an insulative material. Because the separator 230 protrudes farther outward than the uncoated portion, the insulative material may be applied to an end portion of the separator 230. The insulative material may be sprayed onto the cutting area A using a nozzle or the like. In some embodiments, the insulative material may be applied onto the cutting area A using a device such as a dispenser D. In some embodiments, the insulative material may not be applied to the center of the winding, and thus the insulating part or member 700a may have a circular ring plate shape having a cavity formed at the center thereof (e.g. a hollow circular ring shape). The insulative material may be a material that is curable at room temperature and does not dissolve in an electrolyte. For example, the insulative material may be selected from among electrolyte-resistant materials such as polyethylene (PE) or hot melt materials. The application thickness of the insulative material may range from 0.1 mm to 0.7 mm from the upper end of the cutting area A toward the negative electrode mixture portion. When the insulative material is applied, the insulative material may flow down below the uncoated portion. In order to prevent the insulative material from flowing down to the negative electrode mixture portion, the insulative material may be applied only to an end portion of the separator within the aforementioned application range. The application area of the insulative material may range from 2 mm to 5 mm from an end portion of the cutting area A adjacent to the leading end. For example, the insulative material may be applied in the form of a circular ring in the range of 2 mm to 5 mm from the center of the winding in a radial direction.

In some embodiments, an insulating part or member 700b may be manufactured (e.g., in advance) in a circular ring plate shape as shown in FIG. 8. For example, the insulating part or member 700b may have a circular ring plate shape having a thickness of 0.1 to 0.7 mm and a size of 2 to 5 mm (a circular ring shape having a cavity formed at the center thereof). The insulating part or member 700b may be separately manufactured, and may then be placed on the cutting area A (the final form is illustrated in FIG. 8). FIG. 7 is a view representing both the insulating part or member 700a manufactured through the method shown in FIG. 6 and the circular ring plate-shaped insulating part or member 700b manufactured separately. The final positions and shapes of the insulating part or members 700a and 700b may be identical or similar to those shown in FIG. 7 (when the insulative material is applied, the insulative material may flow down below the uncoated portion and thus may not have a complete plate shape). FIG. 7 schematically shows the shape of the insulating member, but the shape of the insulating member should not be limited to the shape shown in FIG. 7, but may include other shapes that will be understood by a person of skill in the art.

If the insulating member is formed through application of the insulative material, which is curable at room temperature, after the insulative material is applied, the upper end of the cutting area A may be cured in a state of being coated with the insulative material. Thus, even if the negative electrode mixture portion expands due to repeated charging and discharging of the secondary battery, contact with the positive electrode substrate tabs may be prevented. If the insulating member is separately manufactured and is placed on the cutting area A, the upper end of the cutting area A may be insulated from the negative electrode mixture portion and the substrate tabs. Thus, it may be possible to prevent short circuit due to contact between the negative electrode mixture portion and the positive electrode substrate tabs. Even if the length of the electrode plate is increased, short circuit between the positive electrode and the negative electrode may be prevented, and thus the capacity of the secondary battery may be increased.

As is apparent from the above description, according to an embodiment of the present disclosure, because an insulating member is disposed adjacent to a leading end portion of a wound area of an electrode assembly, even if a negative electrode mixture portion expands due to repeated charging and discharging of a secondary battery, contact with a positive electrode substrate tabs may be prevented. Thus, it may be possible to prevent short circuit due to contact between the negative electrode mixture portion and the positive electrode substrate tabs.

Even if the length of an electrode plate is increased, short circuit between the positive electrode and the negative electrode may be prevented, and thus the capacity of the secondary battery may be increased.

The above is only one embodiment for implementing the present disclosure, the disclosure is not limited to the above embodiment, and it is to be understood by those skilled in the art that various modifications can be made without departing from of the disclosure as claimed in the following claims.

## Claims

1. A cylindrical secondary battery (10) comprising:
an electrode assembly (200) comprising a first electrode plate (210) having a first active material layer and a first uncoated portion free of the first active material layer, a second electrode plate (220) having a second active material layer and a second uncoated portion free of the second active material layer, and a separator (230) interposed between the first electrode plate (210) and the second electrode plate (220), the electrode assembly (200) being wound in a cylindrical shape to form a winding;
an insulating part (700a) provided on one side of the first uncoated portion and on one side of the second uncoated portion;
a cylindrical can (100) accommodating the electrode assembly (200); and
a cap assembly (600) coupled to one side of the can (100),
wherein a first portion of the first uncoated portion and a second portion of the second uncoated portion adjacent to a center of winding is omitted to form a cutting area (A), and
wherein the insulating part (700a) is provided in the cutting area (A).

2. The cylindrical secondary battery (10) as claimed in claim 1, wherein the insulating part (700a) is formed by an insulative material applied to the cutting area (A).

3. The cylindrical secondary battery (10) as claimed in claim 2, wherein the first active material layer and the second active material layer are free of the insulative material.

4. The cylindrical secondary battery (10) as claimed in claim 2 or 3,
wherein the insulative material is on an end portion of the separator (230) in the cutting area (A), and/or
wherein the insulative material applied to the cutting area (A) has a thickness of 0.1 mm to 0.7 mm, and/or
wherein the insulative material applied to the cutting area (A) has a range of 2 mm to 5 mm from the center of the winding in a radial direction.

5. The cylindrical secondary battery (10) as claimed in any of claims 1 to 4, wherein the insulating part (700b) has a hollow circular ring shape, and/or wherein the insulating part (700a) is inserted into an end portion of the cutting area (A).

6. The cylindrical secondary battery (10) as claimed in any of claims 1 to 5, wherein the can (100) comprises:
a circular upper surface portion (110); and
a side portion (120) extending downward from the upper surface portion (110) and comprising an open lower end, and
wherein the cap assembly (600) is coupled to the lower end of the side portion (120) and is insulated from the side portion (120).

7. The cylindrical secondary battery (10) as claimed in claim 6, further comprising a terminal unit (500) comprising:
a rivet-type positive electrode terminal (510) electrically connected to the first electrode plate (210) and inserted into a through-hole (300a) in the upper surface portion (110); and
a gasket (520) interposed between the positive electrode terminal (510) and the upper surface portion (110) and made of an insulative material.

8. The cylindrical secondary battery (10) as claimed in claim 6 or 7, wherein the side portion (120) is electrically connected to the second electrode plate (220),
wherein the first electrode plate (210) is a positive electrode, and
wherein the second electrode plate (220) is a negative electrode.

9. The cylindrical secondary battery (10) as claimed in claim 7 or 8, further comprising a first electrode current collector (300) disposed between the first electrode plate (210) and the positive electrode terminal (510) and electrically connected to the positive electrode terminal (510) and the first electrode plate (210).

10. The cylindrical secondary battery (10) as claimed in claim 9, further comprising an insulating tape (530) attached to the first electrode current collector (300) facing the positive electrode terminal (510).

11. The cylindrical secondary battery (10) as claimed in claim 10, wherein the first electrode current collector (300) comprises a welding portion (310) welded to the positive electrode terminal (510), and
wherein the insulating tape (530) is attached to an area except for the welding portion (310).

12. The cylindrical secondary battery (10) as claimed in any of claims 6 to 11, further comprising a second electrode current collector (400) disposed between the second electrode plate (220) and the cap assembly (600), electrically connected to the second electrode plate (220) and the side portion (120), and insulated from the cap assembly (600).

13. The cylindrical secondary battery (10) as claimed in any of claims 6 to 12, wherein the cap assembly (600) comprises:
a cap plate (610) coupled to the side portion (120); and
an insulator (620) interposed between the cap plate (610) and the side portion (120) and made of an insulative material.

14. The cylindrical secondary battery (10) as claimed in any of claims 1 to 13,
wherein an area except for the cutting area (A) of the first uncoated portion is cut in a longitudinal direction of the electrode assembly (200) to form a plurality of substrate tabs, and/or
wherein an area except for the cutting area (A) of the second uncoated portion is cut in a longitudinal direction of the electrode assembly (200) to form a plurality of substrate tabs.

15. The cylindrical secondary battery (10) as claimed in claim 14**,** wherein the substrate tabs of the plurality of substrate tabs are folded at an angle .
